(19) Europäisches Patentamt
European Patent Office
Office européen des brevets

(11) **EP 2 608 136 A1**

(12) **EUROPEAN PATENT APPLICATION**

(43) Date of publication:
**26.06.2013 Bulletin 2013/26**

(51) Int Cl.:
***G06Q 10/10*** *(2012.01)*

(21) Application number: **12156399.3**

(22) Date of filing: **21.02.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.12.2011 IN MU35962011**

(71) Applicant: **Tata Consultancy Services Limited
400021 Mumbay (IN)**

(72) Inventors:
• **Mohanty, Santosh Kumar
400093 Maharashtra (IN)**
• **Sarkar, Shampa
400093 Maharashtra (IN)**

(74) Representative: **Clark, David Julian
Potter Clarkson LLP
The Belgrave Centre
Talbot Street
Nottingham NG1 5GG (GB)**

(54) **Invention valuation and scoring system**

(57) A system, and method for evaluating, scoring and rationalizing an invention, a set of a plurality of inventions or an Enterprise-wide invention portfolio has been described, based on weighted sustainable characteristics of the said invention(s) gauged against lag and lead capability measures. The said sustainable capability measurements, incorporating maturity quantification across manifold dimensions generates a Capability Sustainability Score of the said invention(s), which is further fed to evaluate an invention by positioning it against its prime market at a given time for a user-defined geography or jurisdiction. The rationalization of an invention can be retrieved by evaluating the said invention(s) for its projected or predicted Life Cycle revealing fields of improvements.

EP 2 608 136 A1

**Description**

**FIELD OF THE INVENTION**

The present subject matter described herein relates in general to a financial instrument for evaluating intangible assets like inventions or intellectual properties (IP), and more particularly, to an automated system and method for evaluating, scoring or rationalizing an invention or a set of a plurality of inventions.

**BACKGROUND OF THE INVENTION**

Inventions possessing novelty, inventiveness towards technical advancements and capabilities for commercialization construct the intellectual property asset(s) of an entity, organization, community or an Enterprise. Thus, while mining invention in an Enterprise, the prima facie objective is to trace and predict the tangible values attached to such intangible assets, which may further assist an Enterprise for building up strategic decision towards rationalizing / implementing the invention.

Significant challenges exist to efficiently and effectively evaluate, score and rationalize an invention due to complexities in the trend of technology growth, emergence of varieties of newer interdisciplinary fields, volatility of world economy, non-predictability of the market dynamics, etc. So far, several attempts have been made to evaluate different forms of Intellectual Properties viz., Copyrights, Trademarks, Patents, Industrial Designs, etc. from their own, diversified legal and practitioner history. The constraints imposed by such attempts are inclined substantially towards legal and regulatory statutes, associated jurisdictional resolution and acceptable methodologies. On the other hand, considering Patents being the intangible asset, IP valuation systems and methods have been ideated based on prior licensing and sale transactional analysis, wherein such remuneration structures typically being normalized with respect to predictive algorithms based on their historical transactional data. From an Enterprise perspective, an invention is acknowledged as an asset if the value it delivers exceeds its costs. Thus, throughout the life cycle of an invention, viz., from the stage of ideation to its territorial protections and promotions, the value associated with the invention, normalized with respect to the current IP portfolio of an Enterprise, needs to be assessed. Further, being an invention to be aged inevitably, evaluation at multiple docketing levels is crucial for time sustainability and optimized return on investment throughout the entire life cycle of an invention.

Another complex dimension for evaluating an invention lies in cross correlation logistics between other inventions of an Enterprise, which may collectively be capable of producing higher aggregate score than the sum of the individuals, i.e., to be synergistic in nature. However, the challenges are convoluted to evaluate portfolios in such multi-dimensional landscapes due to increasing proliferation and interdependencies among technologies, companies, products and processes.

Thus, it would be desirable to have a valuation, scoring and rationalization system of an Enterprise's inventions, which can be automatically, efficiently and inherently linked to its vibrant and diversified business scenario.

**SUMMARY OF THE INVENTION**

The summary provided herein is to introduce the concepts related to system and method for evaluating, scoring and rationalizing an invention, a set of a plurality of inventions or an Enterprise-wide invention portfolio. This summary is not intended to identify essential features of the claimed subject matter nor is it intended for use in determining or limiting the scope of the claimed subject matter.

One of the preferred embodiments of the present subject matter comprises Invention valuation and Scoring System (IVSS) and method for evaluating, scoring and rationalizing invention(s), wherein the said IVSS may comprise a processor and a memory, coupled to the processor. The memory may further comprise a Delivery Sustainability Weight Module (DSWM), Dimension Maturity Rule Module (DMRM), Capability Sustainability Scoring Module (CSSM), Market oriented Clustering Module (MCM), Invention Valuation Module (IVM), Program Module (PM) and Other Module (OM). The IVSS system embodiments are modularized based on an underlying "sustainability-maturity-market" model (SMMM), which evaluates an invention based on time sustainability capability of certain techno-business lag and lead measurements of an invention, quantified by achieving maturity across manifold techno-legal-economic dimensions of the said sustainable capabilities and determining a Capability Sustainability Score of the said invention(s). The model further evaluates and scores the invention by positioning it against its user-specific prime market at a given time for a particular geography or jurisdiction. The rationalization of an invention can be retrieved by evaluating an invention(s) for its projected or predicted Life Cycle revealing fields of improvements.

The scores, radar profiles, temporal evolutions for user-defined geography or jurisdiction and other graphical analysis and reports of invention(s) or intellectual property asset(s) may further be displayed in several display modules, as one of the embodiments of the memory of IVSS, which in turn facilitates rationalization, performance improvement factors identification, lifetime determination and other capability-sustainability visualization of the present subject matter.

## BRIEF DESCRIPTION OF THE DRAWINGS

Further objects, embodiments, features and advantages of the present invention will become more apparent and may be better understood when read together with the detailed description and the accompanied drawings. The components of the figures are not necessarily to scales, emphasis instead being placed on better illustration of the underlying principle of the subject matter. Different numeral references on figures designate corresponding elements throughout different views. In the figure(s), the left-most digit(s) of a reference number identifies the figure in which the reference number first appears. The use of the same reference number in different figure(s) indicates similar or identical items. However, the manner in which the above depicted features, aspects, and advantages of the present subject matter are accomplished, does not limit the scope of the subject matter, for the subject matter may admit to other equally effective embodiments.

The detailed description is described with reference to the following accompanying figure(s):

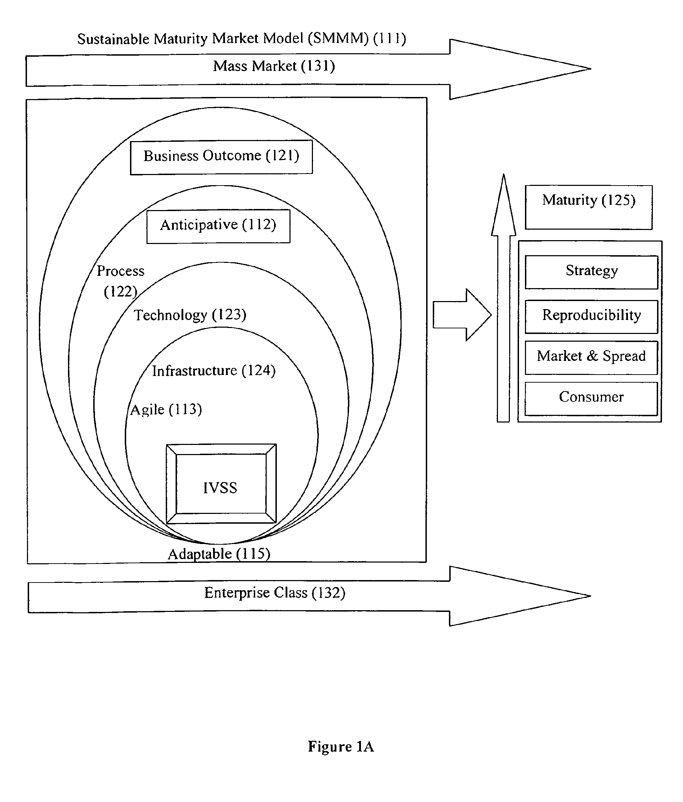

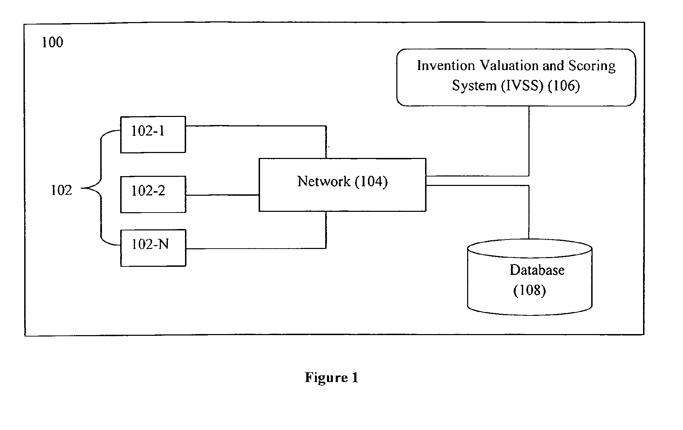

Fig. 1(a) illustrates the schematic of the "sustainable-maturity-market" model (SMMM) of Invention Valuation and Scoring System (IVSS), in accordance with one of the embodiments of the present subject matter.

Fig. 1 illustrates an exemplary network environment (comprising user devices in communication with the server system over a network) for implementing an Invention Valuation and Scoring System (IVSS), in accordance with one of the embodiments of the present subject matter.

Fig.2 illustrates an exemplary Invention Valuation and Scoring System (IVSS), in accordance with an embodiment of the present subject matter.

Figure 3 illustrates the detailed components of the Invention Valuation Module (IVM) referred to in Figure 2, in accordance with an embodiment of the present subject matter.

Figure 4 depicts a pictorial representation of Delivery Sustainability Weight matrix (DSW) as an exemplary component of Delivery Sustainability Weight Module (DSWM) referred to in Figure 2, in accordance with an embodiment of the present subject matter.

Figure 5 depicts a pictorial representation of Dimension Maturity Rule Matrix (DMR) as an exemplary component of Dimension Maturity Rule Module (DMRM) referred to in Figure 2, in accordance with an embodiment of the present subject matter.

Figure 6 depicts a pictorial representation of Capability Sustainability Scoring Matrix (CSS) as an exemplary component of Capability Sustainability Scoring Module (CSSM) referred to in Figure 2, in accordance with an embodiment of the present subject matter.

Figure 7 depicts a pictorial representation of Market Oriented Clustering matrix (MC) as an exemplary component of Market Oriented Clustering Module (MCM) referred to in Figure 2, in accordance with an embodiment of the present subject matter.

Figure 8 shows a flowchart illustrating a method for evaluating, scoring and rationalizing an invention or a set of plurality of inventions, in accordance with an embodiment of the present subject matter.

Figure 9 illustrates the detailed components of the Display Module (DM) referred to in Figure 2, in accordance with an embodiment of the present subject matter.

Figure 10(a) exemplifies Radar Profile Display for Core/lead Sustainability - Capability Module for an invention or a set of a plurality of inventions, in accordance with an embodiment of the present subject matter.

Figure 10(b) exemplifies asymmetric Radar Profile Display for Longevity/lag Sustainability - Capability Module for an invention or a set of a plurality of inventions, in accordance with an embodiment of the present subject matter.

Figure 11 depicts the Graphical Lifetime Valuation Display Module (GLVDM) for an invention or a set of plurality of inventions, in accordance with an embodiment of the present subject matter.

**DETAILED DESCRIPTION OF THE INVENTION:**

The embodiments of the present subject matter comprise an automated Invention Valuation and Scoring system and method for evaluating and rationalizing an invention or a set of a plurality of inventions or an Enterprise-wide invention portfolio. The system embodiments are modularized based on an underlying "sustainable-maturity-market" model (SMMM) (111), which evaluates an invention based on time sustainable capabilities (112-115) of certain techno-business lag and lead measurements (121-124) of one or more inventions, which is quantified by achieving maturity across manifold techno-legal-economic dimensions of the sustainable capabilities and determining a Capability Sustainability Score of the one or more inventions The model further evaluates and scores the invention(s) by positioning it/them against its prime market at a given time for a user-defined geography or jurisdiction. The rationalization of an invention can be retrieved by evaluating the invention(s) for its projected or predicted Life Cycle revealing fields of improvements.

Throughout the Specification of the present subject matter, the word "invention" has broadly been used to express an invention or a Patent or any known or futuristic form of any kind of intellectual property or its associated singular or a plurality of assets, artifacts, products, s, processes, machines, manufactures, compositions of matter, etc. and by no way limit the concept and scope of the present subject matter.

Moreover, throughout the Specification of the present subject matter, the word "asset' has broadly been used to describe economic resources, properties, possessions, stake, etc. capable of being owned or controlled by an entity, wherein an entity can be a person, a stakeholder, a group of persons or stakeholders, an organization, community Enterprise, etc. to produce economic value. The phrase "tangible asset" thus surmises physical substances, wherein such physical substances may comprise liquid assets like cash or cash-equivalents, loans, stocks, prepaid expenses, bills, accrued incomes, varieties of licenses, trade investments or equivalents, etc. and by no manner limit the scope of the present subject matter.

Moreover, the word "valuation" has been used to express the value or tangible assets assigned to or possessed by at least an invention, wherein "score" and "rationalization" represent Scoring and rationalizing or arbitration respectively of at least an invention, thereby with their use in no manner limit the scope of the present subject matter.

For the sake of clarity of the present subject matter, the "sustainable-maturity-market" model (SMMM) (111) has been described in the following sections.

An "invention" originated from human intellect is legally defined as novel and useful product or process or machine, manufacture, composition of matter or any novel and useful improvements thereof, which encompasses an inventive step with technical advancement with capabilities towards industrial applicability. Thus, the valuation and rationalization of such an invention or a set of a plurality of inventions from an Enterprise perspective may be based prima facie on the business-oriented results it delivers or promises to deliver and the time sustainability of such results.

An Enterprise takes business decision to improve on managing its invention portfolio by prioritizing certain focused activities and by achieving growth and time sustainability of those activities (or Organizational invention portfolio) through certain initiatives. Thus, an invention or its technological implementation and commercialization being aligned to dynamic Business portfolio of an Enterprise have to be Anticipative, Agile, Efficient and Adaptable at various docketing levels of it. This may be measured/ evaluated in terms of matured capabilities of the aforementioned sustainable characteristics, viz., (Business) Outcome, Process, Technology and Infrastructure. It is important to mention at this juncture that a person skilled in the art will understand that the said characteristic features describing the sustainability of an invention or a plurality of inventions are mere exemplary embodiments that an Enterprise may adapt with superior ability to sense and respond to the market opportunities with speed, efficiency and resilience and in no way limit the scope of the measurement features of the embodiments of the present subject matter.

To substantiate the said sustainable characteristics of an invention viz., Anticipative, Agile, Efficient and Adaptable, exemplary elucidation of each of these features has been proposed.

An **"Anticipative"** characteristic (112) of an invention may be exemplarily attributed to the well analyzed anticipation of future necessity of the society, market, technology, *etc.* and creation of "Novelty" or Newness in the invention at the present time to plan and address such need. Hence, an anticipative characteristic of an invention may be intimately connected to the longevity of the invention.

An **"Agile"** or responsiveness characteristic (113) of an invention may be exemplarily ascribed by the "Inventive Steps" or "Utility" of the invention in order to sense the current technological evolution and customer need and provide a responsive solution towards achieving the advancement in technology in certain pre-existing or newer interdisciplinary domain(s), which has not been obvious from the prior knowledge and infrastructure.

An **"Efficient"** characteristic (114) of an invention may be exemplarily described by the self-optimization of "Commercial implementation / Applicability" of an invention by 'doing more with less' in terms of lower cost, minimum infrastructural modification, time reduction, better quality, less effort, optimization through process standardization, etc.

An **"Adaptable"** or resilience to change characteristic (115) of an invention may be exemplarily associated with the applicability of the prime commonality of the inventive steps with minimal changes for addressing similar scenarios or problems. Thus, the agility, efficiency and adaptable characteristics of an invention or a set of a plurality of inventions or an Enterprise-wide invention portfolio may comprise the core sustainability of the invention.

The measurements of the aforementioned time-sustainability of an invention or a set of a plurality of inventions may comprise two inter-dependable measures, viz., the (Business) "Outcome" (121) or the lag measure which cohesively being related to the stakeholder or end consumer satisfaction and the "Capability" or the lead measure which steer (lead) to such outcome (lag measure). The lead measure may further categorize in three attributes of evaluation/rationalization, e.g., Process (122), Technology (123) and Infrastructure (124). Hence, the time sustainability characteristics for evaluating an invention may be assessed from an outcome perspective (end consumer, subscriber, etc.) as well as the set of key capabilities, viz., the process, technology and infrastructure and is projected in the "Delivery Sustainability Weight matrix (DSW) (400).

The weight distribution in "Delivery Sustainability Weight matrix" (DSW) (400) is proportional to the invention's long time sustenance with optimized revenue, thus higher weight is being assigned to the anticipative characteristics or longevity of an invention and its consequent impacts on the business outcome (lag measure). Further, to elaborate the model, equal weight (half the value of the higher weight) has been assigned to agile, efficient and adaptable sustainability characteristics with process, technology and infrastructure measures, However, a person skilled in the art will appreciate that the asymmetric weight distribution is a mere enablement of the above-mentioned concept and in no manner limiting the scope and maturity of the concept itself.

In order to determine the maturity level of time sustainable characteristics of an invention or a set of a plurality of inventions, a Dimension Maturity Rule matrix (DMR) (500) has been generated for allocating scores for each cell (i, j $\in$ 1,4) in the Delivery Sustainability Weight Matrix (DSW) (400), as an embodiment of the "sustainable-maturity-market" model. The DMR matrix is being configured to ascertain the maturity level of each sustainable characteristics of the invention to be evaluated with respect to its measurement capabilities.

The Dimension Maturity Rule matrix (DMR) (500) assigns manifold dimensions encompassing "Alignment to (Business) Strategy" (502), "Difficulty to Reproduce" (504), "Addressable Market and Spread" (506) and "Longevity in Consumers' mind" (508), to evaluate and rationalize an invention or the set of a plurality of inventions, with respect to the maturity level of each of the said dimensions. To elaborate the aforementioned dimensions for the purpose of scoring an invention at various docketing levels, exemplary explanation of each of these features have been explained.

The **"Alignment to (Business) Strategy"** (502) of an invention epitomizes the degree of alignment that the said invention or a portfolio comprising the said invention possesses towards organizational or enterprise-level strategy or initiatives. An enterprise will maintain/mature those inventions which has capabilities to deliver direct benefits to its stakeholders over a longer timeframe.

The **"Difficulty to Reproduce"** (504) dimension of an invention calculates the degree of difficulty the market may encounter to reproduce equivalent experience or satisfaction for the consumer in comparison with similar technologically implemented product, tool or process of other technological implementations / artifacts thereof. The said dimension is intricately linked to whether competency and end-to-end traceability has already been created and matured within the Enterprise towards speedy implementation of the patented technology, whether the invention /patented technology portfolio and Business cohesively exploit the established global market of the Enterprise with lower probability of litigation risk in the said technology domain, *etc.*

The **"Addressable Market and Spread"** (506) dimension of an invention focuses on the applicability (including legal) of an invention to multiple geographies/ jurisdiction and the uniformity of spread of consumer base across those. Thus, the maturity level of the aforementioned dimension depends on whether prior Enterprise-level, Business-Technology mapping have been pre-existing or established at those geographies, in order to commercialize the invention efficiently with minimal cost and time. Moreover, as the law of land varies globally, it has to be also taken into consideration that the subject matter of an invention must not fall under the "Non-Patentable Subject Matter" classification of the respective jurisdictional Patent Acts and Rules.

The maturity level of **"Addressable Market and Spread"** (506) is also being determined based on the uniformity of spread of consumer base and presence of Enterprise along with its partner or distributor. This provides input to Enterprise on resource planning to launch the product uniformly at various geographies having substantial demand for the product and a freedom-to-operate (FTO) clearance to practice the invented technology without infringement risks.

Lastly, **"Longevity** in **Consumers' Mind"** (508) measures the long term sustenance of an invention as a key differentiator in a consumer's mind. However, a person skilled in the art will understand that the said characteristic dimensions determining the maturity level of sustainability-capability factors of an invention or a plurality of inventions are mere exemplary embodiments and in no way limit the scope of the numbers or nature of additional dimensional features, which may be included as other embodiments of the present subject matter.

It is important to mention at this juncture that an invention is being protected (applied or granted) as a Patent application with associated Intellectual Property Rights (IPR), wherein the regulatory and legal characteristics of the said rights are exclusionary, territorial and time-limited in nature. Hence, an invention needs to be evaluated in two mutually orthogonal dimensions, viz., as a function of geography or jurisdiction where it is protected for a fixed period of time or as a function of time at a particular territory. In "sustainable-maturity-market" model (SMMM) (111), the geographical dependency or globalization of an invention has been incorporated within the "Addressable Market and Spread" dimension of the Dimension Maturity Rule matrix (DMR) (500).

The maturity of manifold dimensions described in the Dimension Maturity Rule matrix (DMR) (500) are tested against five levels, viz., low (512), low-medium (514), medium (516), medium-high (518), and high (520), wherein low (512) and high (520) are the lowest and highest levels of maturity, respectively, and the intermediate levels (514-518) are stated in a hierarchical order. To elaborate the model, the maximum point score for all the dimensions are being kept identical for each level of maturity. However, a person skilled in the art will understand that such attribution is just the simplest representation of Dimension Maturity Rule matrix (DMR) (500) and in practice, can possess any other value at each dimension for each level.

The "sustainable-maturity-market" model (SMMM) (111) calculates the "cell score" of the Capability Sustainability Scoring Matrix (CSS) (600) at a given time, for a fixed geography. The "cell score" is being calculated in three steps:

In the first step (I), the model determines the existence of a given sustainable characteristics for a measurement capabilities, wherein the existence is Boolean in nature (0 for non-existence and 1 for existence).

In the second step (II), for each non null sustainable-measurable cell of DSW matrix (400), the model runs through each "dimension" of "Dimension Maturity Rule matrix (DMR) (500) to determine its level of maturity and then add the maturity-level values obtained from each dimension to get the aggregate 'maturity score'. Thus, for 'efficient' characteristics in 'technology' capability *(s33),* if the "alignment to strategy" is "medium" *(r13),* "difficult to reproduce" is "medium" *(r23),* "addressable market and spread" is "high" *(r35)* and "longevity in consumer mind" is "low" *(r42),* then the convoluted/aggregate 'maturity score' of (efficiency, technology) cell is:

$$(r13 + r23 + r35 + r42) = s33 \qquad \text{(i)}$$

In the third step (III), the model multiplies 'maturity score' *(sij, i, j* $\in$ 1,4) of each cell with its re-assigned weight (wij for corresponding sij) to determine the final "cell score" for each cell to generate the Capability Sustainability Scoring Matrix (CSS) (600). Thus, the weighted "cell score" of (efficiency, technology) cell *(f33)* will become:

$$s33 \times w33 = f33 \qquad \text{(ii)}$$

Thus, the total "invention score" (*IS*) may be obtained as,

$$IS = \sum_{i,j=1}^{4} fij \qquad \text{(iii)}$$

The "sustainable-maturity-market" model further produces a Market oriented Clustering Matrix (MC) (700), which identifies the prime market (MKT) positioning (choose only one category) of the invention using the following categorization:

The market classification of the commercial implementation of an invention (as product, tool, process, machine, composition of matter, manufacture, etc.) is primarily strategized into two distinct classes, *viz.* "Mass Market" (704) comprises wide-spectrum customer coverage and "Enterprise Class" (706) comprises Enterprise-wide eco system.

The "Mass Market" (704) has further been sub-classified into three sub-classes based on consumer head count vs. market spread, *e.g.,* having market spread *(Mkt)* to be less than $\mu_1$ million consumer *(Mkt < $\mu$1M),* between $\mu_1$ million and $\mu_2$ million consumer *($\mu$1M < Mkt < $\mu$2M)* and greater than $\mu_2$ million consumer *(Mkt < $\mu$2M),* wherein the valuation per unit "cell Score" (*VUS*) (702) of an invention consumable under the aforementioned classes have been considered as *(MV1),* *(MV2)* and *(MV3)* respectively.

$$VUS = MV1orMV2orMV3 \qquad \text{(iv)}$$

Similarly, the "Enterprise Class" 706 has been further sub-classified into three sub-classes, e.g., "Mass User", "Restricted" and "Management", wherein the value of an invention falling under the said categories are considered as *(EV1), (EV2)* and (EV3) respectively, producing:

$$VUS = EV1orEV2orEV3 \qquad \text{(v)}$$

Thus, the Valuation of an invention may be obtained from "sustainable-maturity-market" model (SMMM) (111) in the following manner:

First, the Base Valuation for the Invention (*BVI*) has been generated by Base Valuation Module (302) as:

$$BVI = F1(VUS, IS) \dots\dots\dots\dots\dots\dots\dots\dots\dots\dots\dots\dots\dots\dots\dots (vi)$$

Wherein F1 *is a function of (VUS, IS) for VUS = Valuation per unit "Cell Score ", IS = Invention Score,* considering the primary Currency for Valuation to be *CRN.* The model has considered US\$ as the primary currency to evaluate /rationalize an invention and Valuation in other Currency is based on Purchasing Power Index *(PPI)* Multiplier. Moreover, a person skilled in the art would appreciate and understand that the preferred chosen unit of Currency being the US\$ is an exemplary evaluation unit and will no matter limit the scope of evaluating an invention in any other Currency based on geographical market positioning.

The Time Projection Valuation or Invention Valuation of the invention (IV) generated by Time Projection Valuation Module (TPVM) (304) at any specified year *t* is given by,

$$IV(t) = (BVI)^{[F\{(\frac{IS}{N}),\alpha,t\}]} \dots\dots\dots\dots\dots\dots\dots\dots\dots\dots\dots\dots (vii),$$

Wherein $\left[F\{(\frac{IS}{N}),\alpha,t\}\right]$ is a function of *{IS, N, $\alpha$ and t}* for *N=Maximum possible Invention Score* and for $(\alpha \geq 1)$.

As stated in the above expression, the valuation of an invention *IV(t)* at a given time *t is* proportional to a *"soothing **factor"*** $\alpha$ ($\alpha \geq 1$), wherein $\alpha$ depends on t and is influenced by several factors like rate of change of market dynamics, volatility, positional dependence or proximity to inflection point in the time-technology quadrant, life cycle of the invention or its associated artifact, business diversification, mergers and acquisitions of an Enterprise, *etc.* The functional dependency of *t* in *IV(t) [Equation (vii)]* has been incorporated in such a manner that according to the above equation, the valuation of an invention on first year is given by *BVI* itself, i.e., *IV(1) = BVI.*

The Life Time Valuation of the Invention (*LVI*) is given by,

$$LVI = \sum_{t=1}^{n}(BVI)^{[F\{(\frac{IS}{N}),\alpha,t\}]} \dots\dots\dots\dots\dots\dots\dots\dots\dots\dots (viii)$$

Wherein n=20 may be a preferable option, as the lifetime of a Patent is approximately 20 years, without considering Patent term adjustments of various jurisdictions and considering the evaluation of the invention from the date of filing the Complete/Provisional Specification (CS/PS filing, depends on jurisdiction). However, the time period in different jurisdiction may have different criteria and will not limit the scope of the present subject matter.

The Life Time Valuation of the Invention (*LVI*) predicts the total revenue that an invention can generate over the user-predicted life-cycle of the invention or its associated artifacts. This in turn may depict the rationalization of an invention by revealing fields of improvements (generating lower scores) across various sustainability, capability, market dimensions by measuring the corresponding maturity levels at various phases of the entire life cycle of the invention.

In the following description, several references and examples are made to the embodiment of the subject matter. However, it should be emphasized clearly that the subject matter in no manner is restricted by or limited to these specified references or examples of the embodiments. On the contrary, any combination of the following references and examples is contemplated to implement and practice the present subject matter. Furthermore, in various embodiments the present subject matter provides numerous advantages over the prior art, which are merely illustrative and are not considered elements of limitations for the present subject matter, specifically the claims.

System and method for evaluating, scoring and rationalizing an invention or a set of a plurality of inventions are described herein. The system and the method can be implemented in a variety of computing systems. The computing systems that can implement the described method include, but are not restricted to, mainframe computers, workstations, personal computers, desktop computers, minicomputers, servers, multiprocessor systems, laptops, mobile computing devices, and the like.

In one embodiment, the Invention Valuation and Scoring System (IVSS) 106 help in evaluating, scoring and rationalizing an invention or a set of a plurality of inventions. Examples of an invention may include an research and developmental level concept or idea in an initial stage of ideation, invention being disclosed as an Invention disclosure (ID), an invention applied for a Patent application in a jurisdiction, an invention being granted as a valid Patent in a jurisdiction, an invention being commercialized as a product or a process, etc. A person skilled in the art will understand that the following definition of invention comprises a few examples of different stages of an invention and does not limit the scope of an invention in any other form.

One embodiment of the subject matter is realized as a product being used in a computing environment. The software programs for such a product may comprise routines and subroutines/source codes written in a computer language to perform invention(s) valuation, scoring and rationalization, described as an embodiment of the present subject matter. Such a product can be contained on a variety of computer-readable or computer-rewritable media, wherein such media may include, but are not restricted to CD-ROM, DVD-ROM, floppy disks, hard disk drive, diskette drive, or other form of storage media, on which alterable/upgradable information can be stored.

Fig. 1 depicts an exemplary computing environment (100) for an automated Invention Valuation and Scoring System (IVSS), according to one of the embodiments of the present subject matter. In the said embodiment, the computing environment (100) may comprise of one or more user devices 102-1, 102-2 ...102-N, collectively referred to as the user devices (102), communicating with a Invention Valuation and Scoring System (106) over a network (104). The Invention Valuation and Scoring System (106) and the user device (102) may be implemented as any of a variety of computing devices, including but not limited to, a desktop personal computer (PC), a notebook or portable computer, a tablet computer, a workstation, a mainframe computer, a mobile computing device, an entertainment device, a computing platform, an internet appliance, and the like. However, a person skilled in the art will comprehend that the embodiment of the present subject matter are not limited to any particular computing system, architecture or application device, as it may be adapted to take advantage of new computing system and platform as they become accessible.

The Invention Valuation and Scoring System (106) is connected to the user device (102) over the network (104) through one or more communication links, for example, via dial-up modem connections, cable links, digital subscriber lines (DSL), wireless or satellite links, or any other suitable form, wherein the network (104) may be a wireless network, a wired network, or any combination thereof. In an aspect, the system described may include a database (108) that may be connected with the Invention Valuation and Scoring System (106) wherein the details and characteristics relating to one or more inventions that need to be evaluated, scored and rationalized. In another aspect, the details and characteristics relating to one or more inventions may be entered by a user by employing the user device (102). Needless to mention that those skilled in the art will recognize that Fig. 1 illustrates a simplified schematic diagram to highlight the essential features of the present subject matter and that the computing environment (100) can include varieties of additional components elaborating intricate details which have not shown in Fig. 1.

Moreover, although the computing environment (100) of Fig. 1 illustrates an example of a user / server or a client / server like architecture, one of ordinary skill in the art will recognize that the embodiments of the present subject matter may be adapted for use in a variety of computing environments, such as standalone systems, distributed systems, embedded systems and the like. As an example, the complete user/server system may be a part of a software application running on a single computer system.

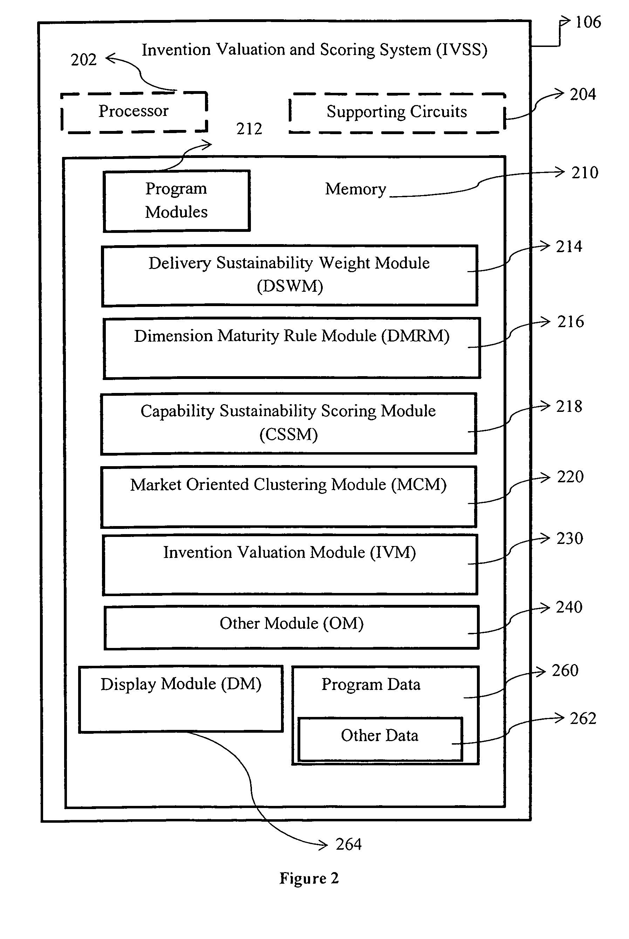

Figure 2 illustrates the system module of the Invention Valuation and Scoring System (IVSS) (106), in accordance with an embodiment of the present subject matter. In said embodiment, the IVSS system (106) includes one or more processors (202), and a memory (210) coupled to the processor (202). The processor (202) may be implemented as one or more microprocessors, microcomputers, microcontrollers, digital signal processors, central processing units, state machines, logic circuitries, and/or any devices that manipulate signals based on operational instructions. Among other capabilities, the processor (202) is configured to fetch and execute computer-readable instructions and data stored in the memory (210). In an aspect, the Invention Valuation and Scoring System (106) may further comprise of a supporting circuits unit (204). The supporting circuits (204) may include components such as Input/ Output (I/O) interfaces (not shown in the figure), network interfaces (not shown in the figure), and the like.

The I/O interfaces may include a variety of software and hardware interfaces, for example, interface for peripheral device(s) such as a display unit, a keyboard, a mouse, an external memory, a printer, and the like. The network interfaces may enable the IVSS system (106) to communicate with other computing devices and peripheral devices, such as web servers, and external databases over the network (104). The network interfaces may facilitate multiple communications within a wide variety of protocols and networks, such as wired networks, e.g., LAN, cable, etc., and/or wireless networks, e.g., WLAN, cellular, satellite, etc.

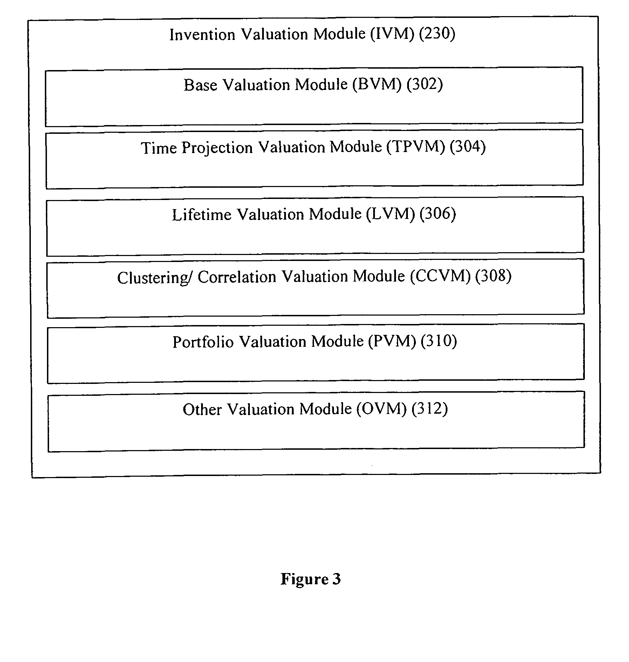

The memory (210) may include any computer-readable medium, such as volatile memory such as static random access memory (SRAM) and dynamic random access memory (DRAM), and/or non-volatile memory, such as read only memory (ROM), erasable programmable ROM, flash memories, hard disks, optical disks, magnetic tapes, and the like. The memory (210) includes one or more modules such as Delivery Sustainability Weight Module (DSWM) (214), Dimension Maturity Rule Module (DMRM) (216), Capability Sustainability Scoring Module (CSSM) (218), Market oriented Clustering Module (MCM) (220), and Invention Valuation Module (IVM) (230). The Delivery Sustainability Weight Module (DSWM) (214) causes the processor (202) to generate time sustainability characteristics of capability measurements of the one or more inventions. The Dimension Maturity Rule Module (DMRM) (216) causes the processor (202) to generate maturity score of the one or more inventions across at least one predefined dimension. The Capability Sustainability Scoring Module (CSSM) (218) causes the processor (202) to determine Invention Score of the one or more inventions. The step of determining score of the one or more inventions comprises multiplying an aggregate maturity score with weight factor of the corresponding sustainability-capability measurement. The Market Oriented Clustering Module (MCM) (220) causes the processor (202) to determine and position the one or more inventions against its associated pre-defined or user-defined prime market at a given time of the determination, for one or more user defined geographical locations or jurisdictions with a pre-defined or user-specified currency of evaluation. Further, the Invention Valuation Module (IVM) (230) causes the processor to generate one or more types of valuation scores for the one or more inventions. The Invention Valuation Module (IVM) (230) has been described in detail in Fig. 3.

In an aspect, another module (240) may be provided in the memory that may include programs or coded instructions that supplement applications and functions on the IVSS system (106), for example, programs in operating system of the IVSS system (106). The other module (240) may further comprise input module for user-defined and user-specified input, output module to collect output, etc.

In another aspect, the memory (210) may also include a program module (212) and a program data module (260). The program module (212) may include routines, programs, objects, components, data structures, etc., that perform particular tasks or implement particular abstract data types.

The program data module (260), amongst other things, may serve as a repository for storing data processed, received, and generated by one or more of the modules. The program data module (260) may also include other data (262). The other data (262) may include data generated as a result of the execution of one or more modules in the other module (240).

In one of the embodiments, the program data module (260) may contain the invention(s) related data, viz., infrastructure, process and technology related data, usage data, mining and analytical data, legal status data, filing, prosecution, granting and/or Docketing Data, etc. As also mentioned above the data related to the one or more inventions to be evaluated, scored and rationalized may be directly entered /inputted by a user by using the user device (102). A person skilled in the art will understand that these are exemplary embodiments and represent a subset of a broader data set and in no way by its definition limit the scope if the present subject matter.

The Program Data module (260) as illustrated in Figure 2 may further comprise transaction database, comprising transaction data corresponding to a singular or plurality of transactions related to the invention(s) or intellectual property asset(s) or its associated artifacts. Further, the Program Data module (260) may comprise data related to prime market comprising time-wise or geography-wise classification (or both), as an exemplary embodiment of the present subject matter. The financial and business related data of an Enterprise may comprise its current and predicted future total turnover and turnover in the technology domain, market and jurisdiction where the invention may be made, used, sold, offered to sale, practiced, etc. It may further comprise the cost benefit assessment of the Enterprise-wide or organizational profit scenario with or without implementation of the invention or its associated artifacts. However, a person skilled in the art would appreciate that these are mere exemplary embodiments of varieties of data that may be stored in the Program Data module (260) as an embodiment of the present subject matter and in no way limit the scope of the same.

In another embodiment, the IVSS system (106) may further comprise a display module that may be coupled with the one or more modules such as Invention valuation module (230) for generating one or more graphs for displaying the valuation score generated by the Invention valuation module (230).

Figure 3 exhibits the sub-modules embedded in the Invention Valuation (IVM) module (230), as one of the embodiments of the present subject matter. The Invention Valuation module (230) comprises one or more modules for determining the valuation of the one or more inventions, including but not limited to Base valuation Module (BVM) (302), Time Projection Valuation Module (TPVM) (304), Lifetime Valuation Module (LVM) (306), Clustering/ Correlation Valuation Module (CCVM) (308), Portfolio Valuation Module (PVM) (310) and other valuation Module (312).

The Base valuation Module (BVM) (302) generates the Base Valuation for the Invention *(BVI)* at the current timeframe (present year) of the invention. The Time Projection Valuation Module (TPVM) (304) produces the valuation of the invention at any given year *'t' as (IV (t))*, both *(BVI)* and (IV) being evaluated for a particular jurisdiction and a specific prime market as a user input in the IVSS system. Further, the Lifetime Valuation Module (LVM) (306) of the Invention Valuation (IVM) module (230) generates the aggregate score during the entire life period of an invention, wherein such life period may be another input parameter being fed to the respective module by the user. The Clustering/ Correlation Valuation Module (CCVM) 308, generates value of a cluster or a set of a plurality of inventions. Further, the Portfolio Valuation Module (PVM) (310) to generate total value of a portfolio of inventions. Such a portfolio may be aligned to the Enterprise's core Business capability and may comprise mapping as a function of location, time, depth and width of Business, etc.

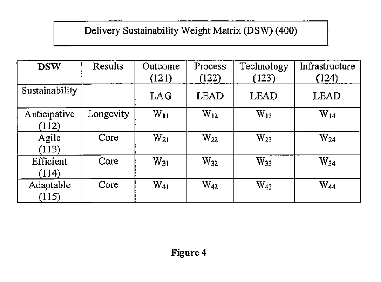

Figure 4 illustrates a Delivery Sustainability Weight matrix (DSW) (400) in accordance with an embodiment.

Such a Delivery Sustainability Weight matrix (DSW) (400) may be implemented by the Delivery Sustainability Weight Module (DSWM) (214) for enabling the processor to assess time sustainability characteristics of capability measurements of an invention. The Delivery Sustainability Weight matrix (DSW) (400) generates cross-relational weight between the "Anticipative", "Agile", "Efficient" and "Adaptable" sustainable characteristics of an invention or a set of a plurality of inventions as a function of lag measure ("Business Outcome') and lead measures ("Process", "Technology" and "Infrastructure"). Table I illustrates an exemplary DSW matrix wherein a weight value of I may be assigned for core sustainable characteristics (agility, efficient, adaptable) with lead outcome measures (process, technology, infrastructure), wherein DSW matrix (400) assigns weight value of 2 for longevity characteristics with lag measure. Thus, the cell depicting anticipative characteristics for Business outcome acquires the highest weight of 4. However, a person skilled in the art will understand that the aforementioned weight distribution is an exemplary manifestation of the present embodiment and may assign any other distribution without restricting the scope of the invention.

| Weight Table | Results | Outcome | Process | Technology | Infrastructure |
|---|---|---|---|---|---|
| **Sustainability** | | LAG | LEAD | LEAD | LEAD |
| Anticipative | | 4 | 2 | 2 | 2 |
| Agile | | 2 | 1 | 1 | 1 |
| Efficient | | 2 | 1 | 1 | 1 |
| Adaptable | | 2 | 1 | 1 | 1 |

Table I

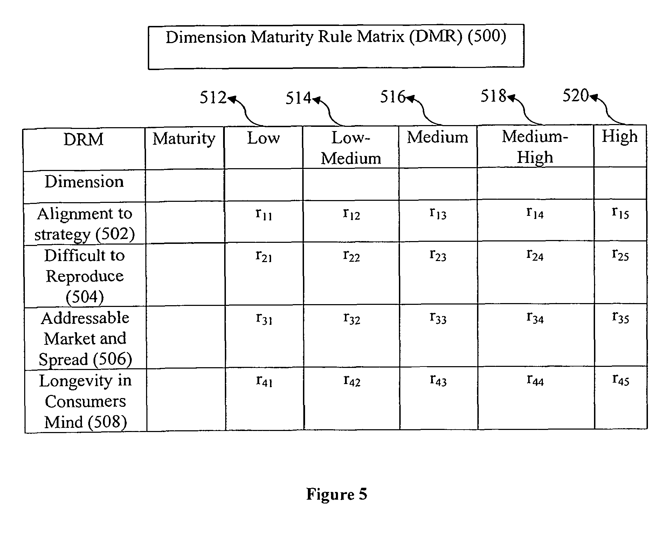

Referring now to Figure 5, a Dimension Maturity Rule matrix (DMR) (500) is shown, in accordance with an embodiment of the present subject matter. The DMR matrix (500) may be generated by the Dimension Maturity Rule Module DMRM (216) in the maturity level determination stage for time sustainability-capability measurements of an invention or a set of a plurality of inventions, measured against manifold dimensions of "Alignment to Business Strategy", "Difficulty to Reproduce", "Addressable Market and Spread" and "Longevity in Consumers' mind". The various maturity levels of aforementioned dimensions of the DMR matrix may comprise low, low-medium, medium, medium-high and high. For example, different dimension may be assigned same score for same maturity level, wherein the levels have values of 0.2, 0.4, 0.6, 0.8 and I (Table II) in hierarchical order of maturity. Moreover, a person skilled in the art will appreciate that the number of maturity levels of the aforementioned dimensions and the corresponding level values represented in Table II elucidate exemplary demonstration of Dimension Maturity Rule matrix (DMR) (500) and thereby not restricting the scope and capacities of the present invention by the manner of presentation.

Table II

| Rule Table | Maturity | Low | Low-Medium | Medium | Medium-High | High |
|---|---|---|---|---|---|---|
| **Dimension** | | | | | | |
| Alignment to strategy | | 0.2 | 0.4 | 0.6 | 0.8 | 1 |
| Difficulty to Reproduce | | 0.2 | 0.4 | 0.6 | 0.8 | 1 |
| Addressable Market and Spread | | 0.2 | 0.4 | 0.6 | 0.8 | 1 |
| Longevity in Consumers Mind | | 0.2 | 0.4 | 0.6 | 0.8 | 1 |

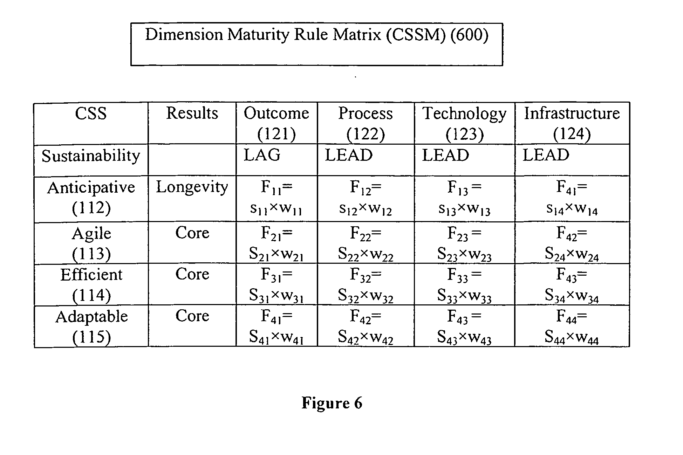

Figure 6 demonstrates a Capability Sustainability Scoring (CSS) matrix (600) that may be generated by the Capability Sustainable Scoring Module (CSSM) (218) in accordance to an embodiment. The scores obtained by testing an invention's various dimensional maturity level in term of its sustainability characteristics for deliverable measure, multiplied by corresponding cell's weight value. The values in the Table I and Table II may be employed. Any changes to these values and scale are subject to analysis by the Enterprise that best suits to their type of inventions. However, the $\sum_{i,j}^{1,4} fij$ in Figure 6 should have the numerical value 100. The capability Sustainability Scoring Module (218) may also comprise a Scoring table as shown in table 4.

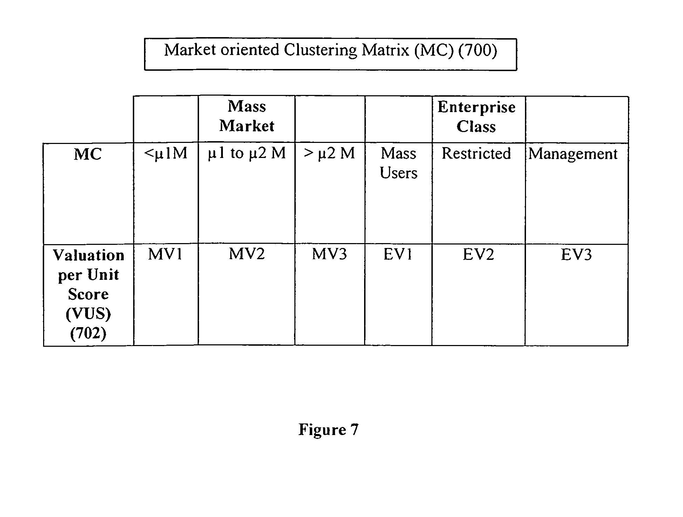

Referring now to Figure 7, a Market Oriented Clustering Matrix (MC) (700) is shown, in accordance with an embodiment that may be implemented by the Market Oriented Clustering Module (MCM) (220). The MCM module (220) allows the user to input the prime currency (CRN) for valuation of an invention and to identify the prime market (MKT) positioning (choose only one category) of an invention from the listed categories. The Valuation per Unit Score (VUS) (702) has two-fold dependencies on MKT and CRN, and is a user input. Table III provides an exemplary Market Oriented Clustering Matrix (MC), values are assigned for different markets considering US$ as the CRN.

Table III

| Recommended VUS for CRN = USS | Mass Market | | | Enterprise Class | | |
|---|---|---|---|---|---|---|
| | $< \mu_1 M$ | $\mu_1 M$ to $\mu_2 M$ | $> \mu_2 M$ | Mass Users | Restricted | Management |
| **Valuation per Unit Score (VUS)** | 10K | 15K | 25K | 20K | 10K | 15K |

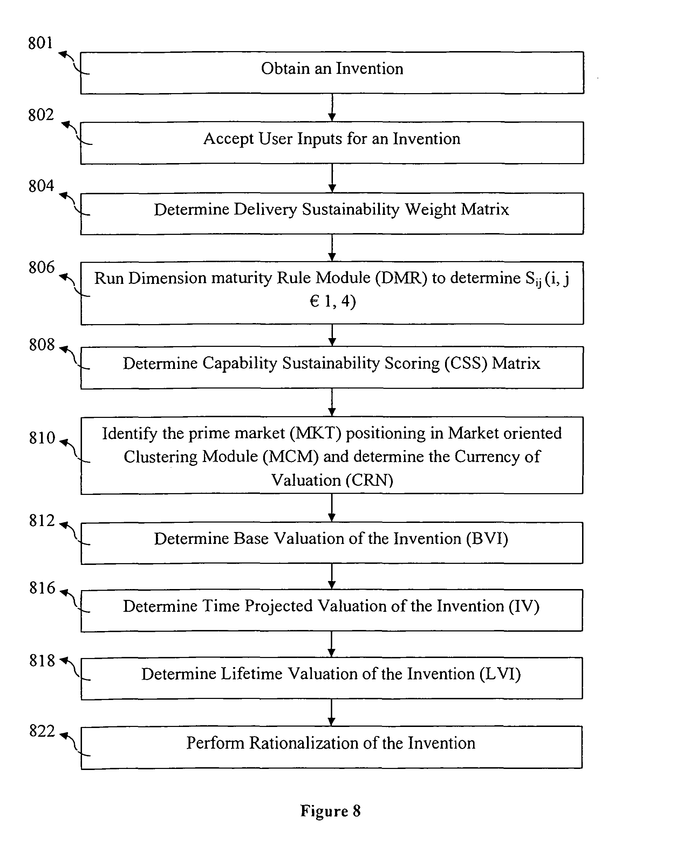

Figure 8 illustrates the flow diagram of the Invention valuation and scoring system, as an embodiment of the present subject matter. An invention or a set of a plurality of inventions or an Enterprise-wide invention portfolio whose values need to assessed and rationalized may be obtained (801) from an internal or external database or from a user-specified input. User-input (802) related to the invention may be accepted by the IVSS system. The invention may run through various modules stored in memory to generate a score, which may further be displayed and reported at a display unit provided in the user device. First, a weight distribution has been assigned for each cell of Delivery Sustainability Weight Matrix (DSW) (400). Following, a Dimension maturity Rule Matrix (DMR) (500) of an invention or a set of a plurality of inventions may be generated by the Delivery maturity Rule Module (DSRM) (216) to determine the maturity scores across manifold dimensions comprising "Alignment to Business Strategy", "Difficulty to Reproduce", "Addressable Market and Spread" and "Longevity in Consumers' mind". Thereafter, a Invention Score (IS) of the said invention or the set of a plurality of inventions is generates by weighted multiplication of the maturity score by employing the Capability Sustainability Scoring Module (CSSM) (218). Further, based on the user-defined market and user-specified currency of calculation (CRN) of Market Oriented Clustering Module (MCM) (220), at least one of the base valuations (BVI), time projected valuation (IV), lifetime valuation (LVI), clustering/ correlation valuation, Portfolio valuation or rationalization of an invention or a set of a plurality of inventions or Enterprise-wide invention portfolio may be evaluated by employing the Invention valuation module and the various sub-modules included. The Base Valuation (BVI) computation of an invention as described herein may comprise generating a pre-defined or user-specified value of Valuation per unit cell score (VUS) of an invention determined by the scoring based on the invention's consumable capacity mapped to at least one of the sub-classes of the Enterprise class or the sub-classes of the Mass Market class, generating Invention Score (IS) or Invention Score (IS) normalized with maximum possible score (N) of the said invention wherein the said Invention score (IS) and the maximum possible score (N) may be obtained by the Capability Sustainability Scoring Module (CSSM) (600) of IVSS, and computing the Base Valuation (BVI) comprising Valuation per unit cell score (VUS) and Invention Score (IS) or Invention Score (IS) normalized with maximum possible score (N).

Further in reference to figure 8, the Time Projection Valuation (IV) computing of an invention as described in Figure 8 may further comprise obtaining the Base Valuation (BVI) of an invention, computing the Base Valuation of an invention powered by Invention Score (IS) normalized with maximum possible score (N) and a soothing factor ($\alpha$), wherein the Invention Score (IS) normalized with maximum possible score (N) and a soothing factor ($\alpha$) may further be powered by a time dependent function wherein the time dependency is such that the Time Projection Valuation may lead to Base Valuation for the beginning year of the invention, wherein the Invention Score (IS) may be computed by adding the cell scores of all the cells of Capability Sustainability Scoring (CSS) matrix. Moreover, the Lifetime Valuation (LVI) computing of an invention may further comprise the aggregating of Time Projection Valuation for each time data point over a user-defined time period or the lifecycle of the invention. Such values that may be generated are then displayed by the user device.

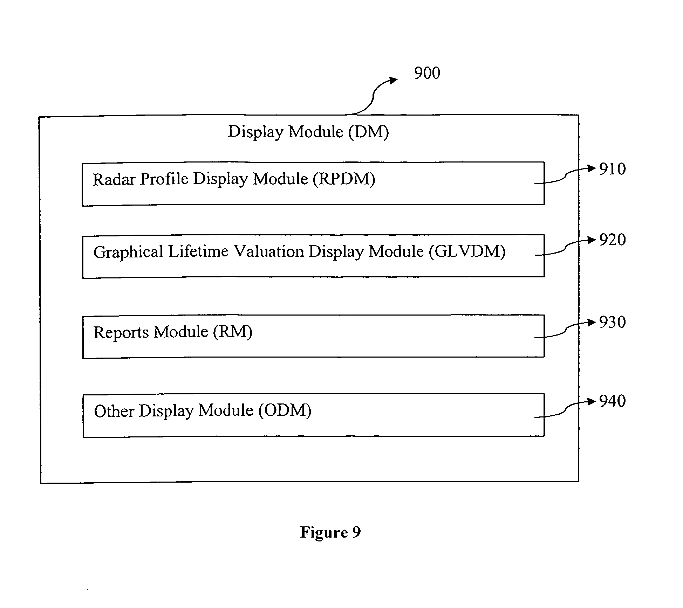

Figure 9 illustrates the Display Module (DM) (900) of an invention, a set of a plurality of inventions or an Enterprise-wide invention portfolio as various display sub-modules (910-950) orchestrated within a display module (900) are also shown, according to one of the embodiments of the present subject matter. The display module DM (900) includes a Radar Profile Display Module (RPDM) (910), Graphical Lifetime Valuation Display Module (GLVDM) (920), Reports Module (930) and Other Display Module (940). However, a person skilled in the art will understand that the aforementioned Display Module (900) comprises exemplary embodiments of displaying the evaluation of an invention or a plurality of inventions and in no way limit the scope of the nature or numbers of additional displaying features, which may be included as other display module (940) embodiment of the present subject matter.

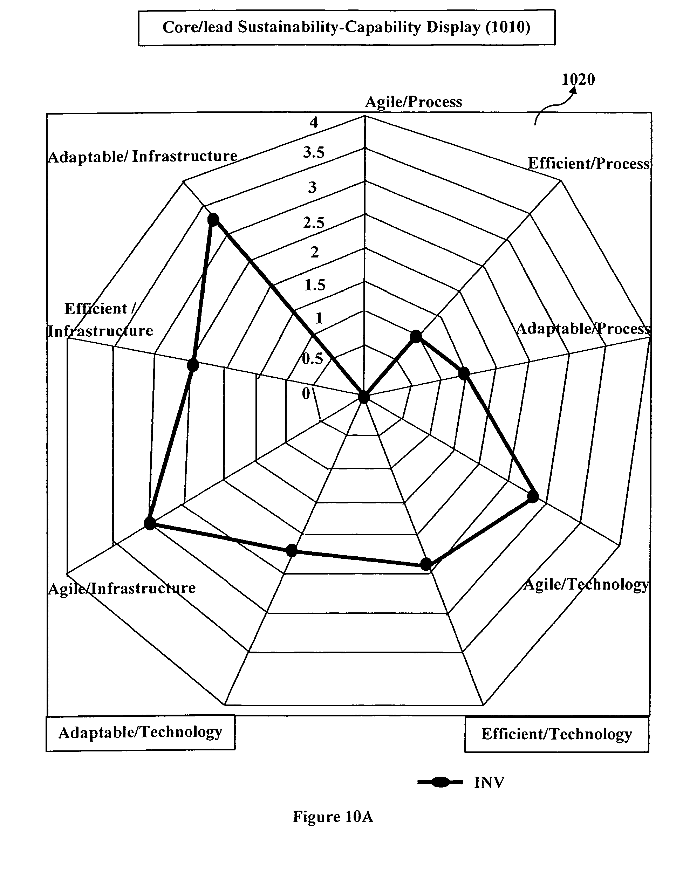

Figure 10(a) displays the Radar profile of 'Core/lead Sustainable-Capability Display' 1010 of an invention at a given time t, projected for a given user-defined geography or jurisdiction, positioned against a user-specified market. The sustenance of an invention measured against agile, efficient and adaptable characteristics which can further be mapped with inventive steps, industrial applicability and anticipation /obviousness of an invention or its artifact has been displayed as connected points in the Radar profile measured against their capabilities in Process, Technology and Infrastructure measurements (1020). Further, maturity score of each of these capabilities measured against their sustenance characteristics for manifold dimensions encompassing "Alignment to Business Strategy", "Difficulty to Reproduce", "Addressable Market and Spread" and "Longevity in Consumers' mind" has been determined and multiplied with the weight factor to generate the Cell Score. Thus, the Radar profile may provide a combination of holistic and discrete visualization of the Sustainable-Capability assessments of the given invention(s), thereby projecting the immediate risks, benefits and opportunities, the stronger and weaker dimensions and the revealing of the influence and mutual interplay between various Core/lead Sustainable-Capability dimensions.

As the overall score for each core-lead Sustainability-Capability factors may vary from 0 to 4 (in accordance to Table II), the Radar Profile 1010 allows score from 0 to 4, as an exemplary embodiment of the present subject matter. Further, the discrete score points are connected by lines for projecting overall covered area by the invention with respect to the total area of coverage, however each line does not carry any linkage between two score points. The Radar profile 1010 of Core/lead Sustainable-Capability measurements at a given time t may further produce a plurality of invention's Core/lead Sustainable-Capability measurements data with different mode of presentation (color code, joining line, symbol size and shape, etc.) on one single display, which may be used to compare their features and visualize them graphically. Further, the Radar Profile of Core/lead Sustainable-Capability measurements may display the Scores of an invention as a function of time t (i.e., for various user-specified years), thereby visualizing the decay or enhancement of sustainability- Capability characteristics of the invention with time. This may further assist in rationalizing the invention revealing its areas and scopes of improvements throughout the user-specified time period or throughout the life-cycle of the invention.

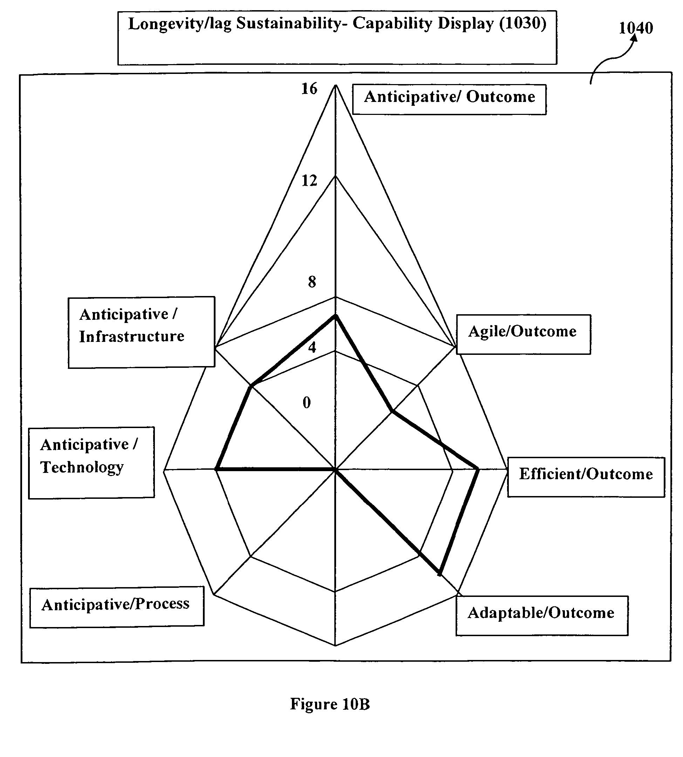

Figure 10(b) further illustrates an asymmetric Radar profile of Longevity /Lag Sustainable-Capability display (1030) of an invention at any given time t, projected for a given user-defined geography positioned against a user-specified market, wherein Anticipative characteristic measured against the lag and lead capabilities, and the (Business) Outcome capability measured against Anticipative characteristics is displayed. As the DSW matrix (400) described in Table I assigns weight value of 2 for longevity characteristics and lag measure wherein the Anticipative characteristics for (Business) Outcome acquires the highest weight of 4, an asymmetric Radar Profile Display 1040 has been created to capture the importance of Anticipative-(Business) Outcome Sustainable-Capability measurements incorporated in their weight distribution.

All the featured described in the previous paragraphs in relation with core-lead Sustainability-Capability display 1010 may be extended for the Longevity /Lag Sustainable-Capability display 1030 of an invention or a set of inventions or a plurality of comparative inventions. The Anticipative characteristics for Business Outcome score has been displayed with different color code (red in the display) than the remaining ones and is displayed on a scale of 16 which may be the maximum possible score for that characteristic measurement, wherein the other Sustainable-Capability measurements are displayed on a scale of their respective maximum score, viz., 8. The asymmetric Radar Profile Display of Figure 10 (b) illustrates the Sustainability Capability Scores of the synthetic invention "*INV*" being depicted in Table IV in the "working example of the present subject matter" section.

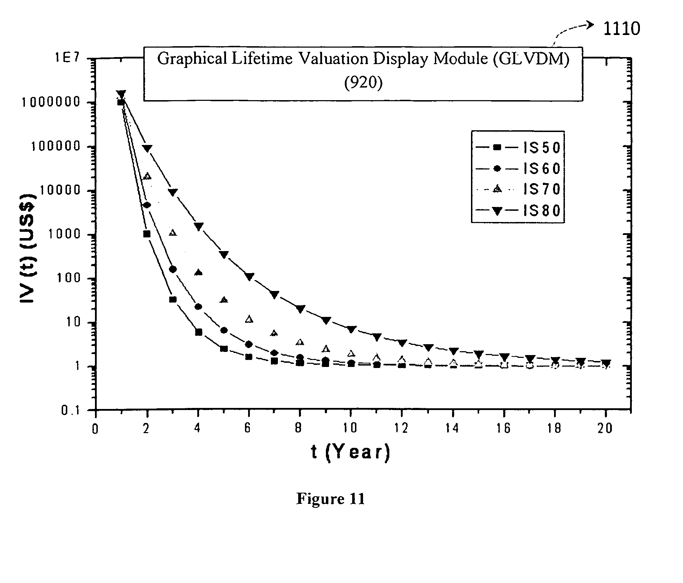

Figure 11 illustrates the Graphical Lifetime Valuation Display Module (GLVDM) 920 of IVSS system, wherein a plurality of graphical representations of valuation of an invention (IV(t)) may be displayed as a function of time t, for t being calculated in the units of year and the values being projected in the unit of US$, as an embodiment of the present subject matter.

As an exemplary illustration 1110, a plurality of inventions with diversified sustainable capabilities marked with varieties of invention score *(IS)* has been displayed on the Graphical Lifetime Valuation Display Module (GLVDM) 920, for *IS* being varied over a range of 50 to 80. A series of graphs *of IV(t)* as a function of *t* hence gets generated with *IS* = 50, 60, 70 and 80, which have been projected on a semi-log scale *(IV(t) in log scale, t in normal scale)* as connected data points represented with different symbols and color codes for the clarity in visualization. It is noteworthy to mention at this juncture that for a variety of inventions exemplified by a wide range of Invention Score (IS) may all produce similar Time Projection Valuation or Invention Valuation (IV(t)) on logarithmic scale at the beginning year of an invention, wherein such value may further merge with the Base Valuation (BVI) of the invention. However, with the evolution of time, the Invention valuation (IV(t)) may decay further exponentially with different rate of decay in their economic value so that the invention with highest invention score (IS) to begin with decays much slower (even on logarithmic scale) in comparison with the inventions possessing lower Invention Score (IS) to begin with. However, over a longer period of time, Invention Valuation (IV(t)) for entire aforementioned series with varieties of Invention Score (IS) ranging between 50 to 80 all decay gradually towards a common saturation point, depicting the end of lifecycle of an invention. Thus, the Graphical Lifetime Valuation Display Module (GLVDM) (920) may further elucidate the rationalization criteria of any invention with its lifetime determination, wherein the said determination may be performed based on its relative decay at any given point of time with respect to other inventions matured with different sustainable capabilities over manifold techno-legal-business dimensions. Hence, the exemplary illustration depicted in Figure 11 may project that with increasing Invention Score (IS) with higher Capability-sustainability, the decay in the Invention Valuation (IV(t)) is slower, wherein such visualization may be implemented as a primary indicator for Lifetime determination and rationalization of an invention.

The Display Module (900) of Invention Valuation and Scoring System (IVSS) may comprise other reporting modules (930) with assessment reports based on a set of rules comprising several analytical features, risk-benefit assessment features, portfolio analysis features, comparative analysis between a set of a plurality of inventions, etc. A person skilled in the art will understand that the aforementioned display modules and features are mere illustrative modes of the performance of an invention or a set of inventions and in no manner may limit the scope of the present subject matter.

As an exemplary illustration of the present subject matter, a synthetically created invention "INV" (Symbolic name) is being considered and executed under the "sustainable-maturity-market" model (SMMM) (111). A person skilled in the art would understand and appreciate that such an example is to merely illustrate various steps and features comprising the present subject matter and in no way limit the scope of the same from its realization in the broadest manner.

The synthetic invention "INV" referring hereafter may represent an invention or a set of plurality of inventions or an Enterprise-wide invention portfolio or any other known or futuristic form of its associated artifact or implementation.

The invention "INV" and its valuation parameters / features can be entered as a user-specified input or can be taken from any external or internal database (260). To begin with, the time sustainability of "INV" characterized by Anticipation, Agile, Efficient and Adaptable dimensions have to be measured each against Business Outcome, Process, Technology and Infrastructure capabilities. Let "INV" may comprise the following features:

"INV" is lacking in Business "Process" capability for sustainable abilities to sense the current need of the market and technology thereby not being "Agile" to provide a responsible solution. For such a scenario, "INV" may not have any sustainable "'Agile" characteristics in "Process" capability measurements, thus the score of the cell $INV$ (Agile, Process) may assign Null value (represented by s22) in Figure 6. This may result in no further influence by dimensions, as the existence of any sustainable-capability measurements is Boolean in nature (0 or Null value for non-existence and 1 for existence).

Let us consider the "Efficient" sustainable characteristics *of INV for* "doing more with less" in terms of lower cost, time reduction, better quality, less effort, etc., being measured against "Technology" capability lead measure. We may assume that $INV$ has existence for Efficient-Technology sustainable capability measurements, which produces Boolean value 1. For any "existence" scenario, the Dimension maturity Rule matrix (DMR) (500) (illustrated in Figure 5) has to be computed to generate aggregate score for that said cell.

The DMR matrix (500) may be generated by the Dimension Maturity Rule Module DMRW (216) in the maturity level determination stage for time sustainability-capability measurements of an invention or a set of a plurality of inventions, measured against manifold dimensions of "Alignment to Business Strategy", "Difficulty to Reproduce", "Addressable Market and Spread" and "Longevity in Consumers' mind". The various maturity levels of aforementioned dimensions of the DMR matrix may comprise low, low-medium, medium, medium-high and high, wherein the best mode implementation of the DMR matrix may assign same score for same maturity level with values of 0.2, 0.4, 0.6, 0.8 and 1 (Table II) in hierarchical order of maturity.

We may further utilize Table II to generate the aggregate 'maturity score' for the cell (Efficient, Technology) for $INV$ with the following maturity dimensions: "Alignment to Business Strategy" is considered to be "medium"(value 0.6), "Difficulty to Reproduce" is considered to be "medium" (value 0.6), "Addressable Market and Spread" may be considered to be "medium-high" (value 0.8) and "Longevity in Consumers' Mind" may be considered to be "low-medium" (value 0.4). Thus the aggregate maturity score of the cell $INV$ (Efficient, Technology) represented by s33 in Figure 6 becomes,

$$s33 = 0.6 + 0.6 + 0.8 + 0.4 = 2.4$$

In a similar manner, the 'maturity scores' for each cell $sij$ $(i,j \in 1,4)$, have been computed and are being incorporated in Score table being an embodiment of Capability Sustainable Scoring Module (CSSM) 218.Thus, $INV$ being synthetically evaluated for various longevity and core sustainable characteristics against lag and lead capability measures being represented by the following Table IV (Score Table INV ST) as:

| ScoreTable (ST) | Results | Outcome | Process | Technology | Infrastructure |
|---|---|---|---|---|---|
| **Sustainability** | | LAG | LEAD | LEAD | LEAD |
| Anticipative | | 1.8 | 0 | 3.2 | 2.8 |
| Agile | | 1.2 | 0 | 2.8 | 3 |
| Efficient | | 2.6 | 1 | 2.4 | 2.4 |
| Adaptable | | 2.4 | 1.4 | 2.2 | 3.2 |

Table IV: Score for *INV* (INV ST)

The sustainable capabilities exhibited in Table IV may need to be weighted by the Delivery Sustainability Weight matrix (DSW) in order to generate the Capability Sustainability Scoring (CSS) matrix (600) for INV as represented in Figure 6. As in the best mode implementation of IVSS (106), various weighted sustainable capability measures may be represented by Table I ( i.e., DSW matrix with weight value of 1 for core sustainable characteristics (agile, efficient, adaptable) with lead outcome measures (process, technology, infrastructure), and weight value of 2 for longevity characteristics with lag measure), the score table for INV (INV ST) and weight table (Table I) generates the aggregate score for the invention (INV SCORE) as projected in Table V as:.

INV SCORE = {7.2+2.4+5.2+4.8+0+0+1+ 1.4 + 6.4 + 2.8 + 2.4 + 5.6 + 3 + 2.4 + 3.2} =50

| WT*INV ST | Results | Outcome | Process | Technology | Infrastructure |
|---|---|---|---|---|---|
| **Sustainability** | | LAG | LEAD | LEAD | LEAD |
| Anticipative | | 7.2 | 0 | 6.4 | 5.6 |
| Agile | | 2.4 | 0 | 2.8 | 3 |
| Efficient | | 5.2 | 1 | 2.4 | 2.4 |
| Adaptable | | 4.8 | 1.4 | 2.2 | 3.2 |

TABLE V: (INV SCORE)

After determining the invention score (INV SCORE) of the synthetic invention *INV* by measuring various aforementioned "sustainable" capabilities gauged by their "maturity" quantification across predefined manifold techno-legal-business-economic dimensions, the "sustainable-maturity-market" model (SMMM) further considers a "Market" oriented Clustering Matrix (MC), which identifies the prime market (MKT) positioning (choose only one category) of *INV*. Such a positioning may be user-specified based on predefined categorization of the market classification.

We may assume that the synthetic invention INV be positioned in "Enterprise Class" Market under "Mass User" subclass, as described in Table III, wherein the valuation per unit "cell Score" (*VUS*) of *INV* may be considered as *(EV1)*. Let may further assume that the currency of valuation for *INV* be US$, which implies CRN = US$. Considering Table III, such a market scenario may generate the VUS for *INV* to be US$20K.

Based on the above information and computations, the Base Valuation (BVI) of the synthetic invention *INV* can be computed by,

$$BVI\_(INV) = F1(VUS, IS) = F1(US\$20K, 50)$$

Considering a simple and illustrative functional dependence, *F1(VUS,IS)=(VUS×IS)* the Base Valuation of *INV* is given by, *BVI_(INV)=US$20K×50=US$1M* , wherein 20K implies $20 \times 10^3$ and M implies M = million = $10^6$.

As the Base Valuation further projects the valuation of an invention for the first year of consideration, the valuation of the synthetic invention *INV* for the first year may be given by, IV(1)_*INV*=US$1M.

Further the time dependency of the valuation of the invention projected at any given year *t* may be given by the following relation $IV(t) = (BVI)^{[F\{(\frac{IS}{N}),\alpha,t\}]}$ , wherein N = maximum possible invention score = 100 thereby

producing $\dfrac{IS}{N} = \dfrac{50}{100} = 0.5$ for *INV*. Further considering a representative functional dependency of F as:

$$F\{(\dfrac{IS}{N}),\alpha,t\} = \alpha \times (\dfrac{IS}{N})^{(t-1)}$$ with the smoothing factor $\alpha$= 1, the invention score *IV(t)_INV* at any given time t may produce:

$$IV(t)\_INV = (BVI\_INV)^{[\alpha(\frac{IS}{N})^{(t-1)}]} \sim (US\$1M)^{[(0.5)^{(t-1)}]} \quad \text{for } \alpha = 1.$$

The invention valuation *IV(t)_INV* of *INV* as obtained by the aforementioned equation may be graphically depicted in Figure 11 as the plotted curve of (IS 50). The graphical representation of the *IV(t)_INV* versus t data projects the decay rate of *INV* with time t throughout the lifecycle of *INV*, wherein the lifecycle has been considered as 20 years. The graph shows that the decay in economic value of *INV* on a semi-log scale is very rapid at the beginning years of valuation which becomes eventually slower at the later stage of the lifecycle.

The lifetime valuation of the synthetic invention INV may be computed as:

$$LVI\_INV = \sum_{t=1}^{n} (BVI)^{[(\frac{IS}{N})^{(t-1)}]} = \sum_{t=1}^{n} (1M)^{[(1/2)^{(t-1)}]}$$

Thus, for t = 20, LVI_*INV* generates,

$$LVI\_INV = (1M + (1M)^{[(1/2)^{(1)}]} + \dots\dots + (1M)^{[(1/2)^{(19)}]})US\$ = US\$(1000000 + 1000 + 31.6$$
$$+ 5.6 + 2.4 + 1.5 + \dots\dots) \sim US\$\ 1.001M$$

Such Life Time Valuation *(LVI_INV)* of the synthetic invention *INV* may predict the total revenue that *INV* may generate over the 20 years of lifecycle, which in turn may depict the rationalization of *INV* by revealing fields of improvements (from its decay rate at various projected time and time period) across various sustainability, capability, market dimensions by measuring the corresponding maturity levels at various phases of the entire life cycle of the invention.

The present subject matter, therefore, provides an Invention Valuation and Scoring System and Method for evaluating, scoring and rationalizing an invention, a set of a plurality of inventions or an Enterprise-wide invention portfolio. The present subject matter may be used for evaluating Intellectual Property Assets primarily Patents, Patent Portfolio, etc. or to reveal the rationalization factors of the said assets with time and geography. The present subject matter may also be used to evaluate and score multiple competitive inventions or Patents or Intellectual Property assets, which can be advantageous towards determining Enterprise's strategic movement in profitable technological domain and aligned market/geography.

It is to mention at this juncture that although the present subject matter has been described in detail; those skilled in the art should understand that they can make various changes, substitutions and alteration herein, without departing from the crux of the subject matter in its broadest form.

## Claims

1. A system for evaluating, scoring and rationalizing one or more inventions, the system comprising at least one user device connected to an Invention Valuation and Scoring System (IVSS) via a network, wherein the Invention Valuation and Scoring System comprises:

   a processor; and
   a memory coupled to the processor, wherein the memory comprising:

a Delivery Sustainability Weight Module (DSWM) causing the processor to generate a Delivery Sustainability Weight Matrix by assessing weighted longevity or core sustenance of the one or more inventions measured against at least a lag or lead capability attribute;

a Dimension Maturity Rule Module (DMRM) causing the processor to generate a Dimension Maturity Rule Matrix by determining an aggregate maturity score for each cell of the Delivery Sustainability Weight Matrix;

a Capability Sustainability Scoring Module (CSSM) causing the processor to generate a Capability Sustainability Scoring Matrix by determining score of the one or more inventions by multiplying an aggregate maturity score with weight factor of the corresponding sustainability-capability cell;

a Market Oriented Clustering Module (MCM) causing the processor to determine and position the one or more inventions against its associated pre-defined or user-defined prime market, for one or more user defined geographical locations or jurisdictions with a pre-defined or user-specified currency of evaluation;

an Invention Valuation Module (IVM) causing the processor to generate one or more types of valuation scores and rationalize the one or more inventions; and

at least one Display Module adapted to display the generated valuation scores or reports related to the one or more inventions.

2. The system as claimed in claim 1, wherein the Invention Valuation Module (IVM) comprises at least one of a Base valuation Module (BVM), a Time Projection Valuation Module (TPVM), a Lifetime Valuation Module (LVM), a Clustering Correlation valuation Module (CCVM) and a Portfolio Valuation Module (PVM).

3. The system as claimed in claim 1, wherein the Delivery sustainability weight matrix (DSW) comprises:

at least one of weighted sustainable Longevity characteristics adapted to be measured by an Anticipative characteristic of an invention and one or more weighted sustainable Core characteristics adapted to be measured by at least one of Agile, Efficient and Adaptable characteristics of an invention; and

at least one of lag and lead Capability attribute for at least one aforementioned sustainable characteristic, wherein the lag capability attribute further comprises a (Business) Outcome measure and the lead capability attribute further comprises at least a Process, a Technology or

an Infrastructure measure.

4. The system as claimed in claim 3, wherein a higher weighted distribution may be assigned to the longevity sustainable characteristic with the lag capability measure.

5. The system as claimed in claim 3, wherein existence of a given sustainable characteristics for a measurement capabilities of Delivery sustainability Weight Matrix (DSW) may be Boolean in nature.

6. The system as claimed in claim 1, wherein Dimension Maturity Rule Matrix (DMR) comprises at least one of;

an "Alignment to Business Strategy", a "Difficulty to Reproduce", an "Addressable Market and Spread" and a "Longevity in Consumers' mind" as the predefined dimension; and

a plurality of maturity levels comprising low, low-medium, medium, medium-high and high, wherein low and high determining the lowest and highest levels of maturity, respectively, with the intermediate maturity levels being stated in a hierarchical order in value.

7. The system as claimed in claim 1, wherein the Market Oriented Clustering Matrix comprises a plurality of Market options wherein the Market options may further comprise:

a "Mass Market" option, wherein the "Mass Market" option is sub-classified into a plurality of sub-classes determined by the consumer head count versus market spread; and

an "Enterprise Class" option wherein the "Enterprise class" is sub-classified into a plurality of sub-classes comprising at least one of "mass users" sub-class, "restricted users" sub-class and "Management" sub-class.

8. The System as claimed in claim 2, wherein the Base Valuation module further generates Base Valuation of the one or more inventions at a beginning year, wherein the Base Valuation may further comprise:

a pre-defined or user-specified value of Valuation per unit cell score of the invention determined by the scoring based on the invention's consumable capacity mapped to at least one of the sub-classes of the Enterprise option or the sub-classes of the Mass Market option; and

an Invention Score of the invention obtained by the Capability Sustainability Scoring Module.

9. The system as claimed in claim 1, wherein the Time Projection Valuation comprises:

Base Valuation of the invention raised to the power of an Invention Score (IS) normalized with maximum possible score (N) and a soothing factor ($\alpha$),

wherein the Invention Score (IS) normalized with maximum possible score (N) and a soothing factor ($\alpha$) may further be powered by a time dependent function wherein the time dependency is such that the Time Projection valuation may lead to Base Valuation for the beginning year of the invention; and

wherein, the Invention Score (IS) may be obtained by adding the cell scores of all the cells of Capability Sustainability Scoring (CSS) matrix.

10. The system as claimed in claim 1 wherein the Lifetime Valuation comprises the aggregate value of Time Projection Valuation for each time data point over a user-defined time period or the lifecycle of the invention.

11. The system as claimed in claim 1 may further comprise a Display module comprising at least one of
   a Radar Profile Display Module (RPDM) configured to visualize at least one of
   a Core/Lead Sustainability-Capability display module for visualization of at least one of agile, efficient and adaptable sustainable characteristics measured against at least one of technology, process and infrastructure capability attributes for at least one invention at a user-defined time or at a set of plurality of user-defined times;
   a Longevity/Lag Sustainability-Capability display module for visualization of anticipative sustainable characteristic measured against at least one of (business) outcome, technology, process or infrastructure capability attribute or the (business) outcome lag measure determined for at least one of anticipative, agile, efficient or adaptable sustenance for at least an invention at a user-defined time or at a set of plurality of user-defined times;
   a Graphical Lifetime Valuation Display Module (GLVDM) displaying the lifetime valuation of at least an invention for a user-defined time period; and
   Reports Module (RM) configured to generate assessment reports based on a set of rules.

12. The set of rules as claimed in claim 11 may further comprise at least:

a singular or plurality of analytical features, risk-benefit assessment features, portfolio analysis features or comparative analysis between a set of a plurality of inventions.

13. A computer-implemented method for determining the valuation of an invention or a set of inventions or an Enterprise-wide invention portfolio, the method comprising:

obtaining at least an invention from a database comprising invention(s), invention portfolio(s) or from a user-specified input;
defining a Sustainable Maturity Market Model (SMMM) comprising
a Delivery sustainability Weight matrix (DSW) for weighted sustainable capability measurements by determining the sustenance of the said invention;
a Dimension Maturity Rule Matrix (DMR) for generating the aggregate maturity score of an invention measured over at least one predefined maturity dimension;
determining Capability Sustainability Score of an invention from the aggregate maturity score multiplied by the cell weight of delivery sustainability weight matrix;
identifying prime market or having user-specified input of the prime market in Market Oriented Clustering Module
determining the positioning of the invention and identifying the Currency for Valuation (CRN); and
calculating at least one of Base Valuation, Time Projection Valuation and Lifetime Valuation of the said invention by accepting user input of the data related to the invention where required.

Figure 1A

**Figure 1**

Figure 2

Invention Valuation Module (IVM) (230)

Base Valuation Module (BVM) (302)

Time Projection Valuation Module (TPVM) (304)

Lifetime Valuation Module (LVM) (306)

Clustering/ Correlation Valuation Module (CCVM) (308)

Portfolio Valuation Module (PVM) (310)

Other Valuation Module (OVM) (312)

**Figure 3**

Delivery Sustainability Weight Matrix (DSW) (400)

| DSW | Results | Outcome (121) | Process (122) | Technology (123) | Infrastructure (124) |
|---|---|---|---|---|---|
| Sustainability | | LAG | LEAD | LEAD | LEAD |
| Anticipative (112) | Longevity | $W_{11}$ | $W_{12}$ | $W_{13}$ | $W_{14}$ |
| Agile (113) | Core | $W_{21}$ | $W_{22}$ | $W_{23}$ | $W_{24}$ |
| Efficient (114) | Core | $W_{31}$ | $W_{32}$ | $W_{33}$ | $W_{34}$ |
| Adaptable (115) | Core | $W_{41}$ | $W_{42}$ | $W_{43}$ | $W_{44}$ |

Figure 4

Dimension Maturity Rule Matrix (DMR) (500)

512  514  516  518  520

| DRM | Maturity | Low | Low-Medium | Medium | Medium-High | High |
|---|---|---|---|---|---|---|
| Dimension | | | | | | |
| Alignment to strategy (502) | | $r_{11}$ | $r_{12}$ | $r_{13}$ | $r_{14}$ | $r_{15}$ |
| Difficult to Reproduce (504) | | $r_{21}$ | $r_{22}$ | $r_{23}$ | $r_{24}$ | $r_{25}$ |
| Addressable Market and Spread (506) | | $r_{31}$ | $r_{32}$ | $r_{33}$ | $r_{34}$ | $r_{35}$ |
| Longevity in Consumers Mind (508) | | $r_{41}$ | $r_{42}$ | $r_{43}$ | $r_{44}$ | $r_{45}$ |

**Figure 5**

Dimension Maturity Rule Matrix (CSSM) (600)

| CSS | Results | Outcome (121) | Process (122) | Technology (123) | Infrastructure (124) |
|---|---|---|---|---|---|
| Sustainability | | LAG | LEAD | LEAD | LEAD |
| Anticipative (112) | Longevity | $F_{11}=$ $s_{11} \times w_{11}$ | $F_{12}=$ $s_{12} \times w_{12}$ | $F_{13}=$ $s_{13} \times w_{13}$ | $F_{41}=$ $s_{14} \times w_{14}$ |
| Agile (113) | Core | $F_{21}=$ $S_{21} \times w_{21}$ | $F_{22}=$ $S_{22} \times w_{22}$ | $F_{23}=$ $S_{23} \times w_{23}$ | $F_{42}=$ $S_{24} \times w_{24}$ |
| Efficient (114) | Core | $F_{31}=$ $S_{31} \times w_{31}$ | $F_{32}=$ $S_{32} \times w_{32}$ | $F_{33}=$ $S_{33} \times w_{33}$ | $F_{43}=$ $S_{34} \times w_{34}$ |
| Adaptable (115) | Core | $F_{41}=$ $S_{41} \times w_{41}$ | $F_{42}=$ $S_{42} \times w_{42}$ | $F_{43}=$ $S_{43} \times w_{43}$ | $F_{44}=$ $S_{44} \times w_{44}$ |

**Figure 6**

Market oriented Clustering Matrix (MC) (700)

| MC | $<\mu 1 M$ | Mass Market | | | Enterprise Class | |
|---|---|---|---|---|---|---|
| | | $\mu 1$ to $\mu 2$ M | $> \mu 2$ M | Mass Users | Restricted | Management |
| **Valuation per Unit Score (VUS) (702)** | MV1 | MV2 | MV3 | EV1 | EV2 | EV3 |

**Figure 7**

801 → Obtain an Invention

802 → Accept User Inputs for an Invention

804 → Determine Delivery Sustainability Weight Matrix

806 → Run Dimension maturity Rule Module (DMR) to determine $S_{ij}$ (i, j € 1, 4)

808 → Determine Capability Sustainability Scoring (CSS) Matrix

810 → Identify the prime market (MKT) positioning in Market oriented Clustering Module (MCM) and determine the Currency of Valuation (CRN)

812 → Determine Base Valuation of the Invention (BVI)

816 → Determine Time Projected Valuation of the Invention (IV)

818 → Determine Lifetime Valuation of the Invention (LVI)

822 → Perform Rationalization of the Invention

Figure 8

900

Display Module (DM)

Radar Profile Display Module (RPDM) → 910

Graphical Lifetime Valuation Display Module (GLVDM) → 920

Reports Module (RM) → 930

Other Display Module (ODM) → 940

**Figure 9**

Figure 10A

Longevity/lag Sustainability- Capability Display (1030)

1040

16
12
8
4
0

Anticipative/ Outcome

Agile/Outcome

Efficient/Outcome

Adaptable/Outcome

Anticipative/Process

Anticipative /
Technology

Anticipative /
Infrastructure

Figure 10B

29

Figure 11

Europäisches
Patentamt

European
Patent Office

Office européen
des brevets

# EUROPEAN SEARCH REPORT

Application Number

EP 12 15 6399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject-matter, with due regard to the description and drawings in accordance with Article 92 EPC, relates to processes comprised in the list of subject-matter and activities excluded from patentability under Article 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. * ----- | 1-13 | INV. G06Q10/10 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 21 March 2013 | Bohner, Michael |